# EUROPEAN PATENT APPLICATION

(11) **EP 4 523 908 A1**
(43) Date of publication of application: **19.03.2025**
(21) Application number: 23803410.2
(22) Date of filing: 24.04.2023
(51) Int. Cl.: B32B 27/18, A01N 59/16, A01P 1/00, B32B 27/00, C01G 39/00

(54) **ADHESIVE FILM**

(30) Priority: 09.05.2022 JP 2022076996
(71) Applicant: Niterra Co., Ltd., Nagoya-shi, Aichi 461-0005 (JP)
(72) Inventor: OKIMURA Yasuyuki, Nagoya-shi, Aichi 461-0005 (JP); SHOJI Mao, Nagoya-shi, Aichi 461-0005 (JP); KOZUKA Hisashi, Nagoya-shi, Aichi 461-0005 (JP); HAYAKAWA Eri, Nagoya-shi, Aichi 461-0005 (JP); IWATA Masaya, Nagoya-shi, Aichi 461-0005 (JP); MURAI Ryota, Nagoya-shi, Aichi 461-0005 (JP); OKAYAMA Hiroki, Nagoya-shi, Aichi 461-0005 (JP)
(74) Representative: Zimmermann & Partner Patentanwälte mbB
(86) International application number: PCT/JP2023/016093
(87) International publication number: WO 2023/218928

(57) **Abstract**

An adhesive film 1 of the present invention includes: a film layer 2 including rare earth molybdenum-based composite oxide 4 and a base 5; and an adhesive layer 3 disposed on one surface 2a of the film layer 2, and the rare earth molybdenum-based composite oxide 4 is exposed at a surface 2b on an opposite side to the one surface 2a side.

## Description

### TECHNICAL FIELD

The present invention relates to an adhesive film.

### BACKGROUND ART

As disclosed in Patent Document 1, an antibacterial film which exhibits antibacterial performance and is adhered to an object when used, is known. The antibacterial film has a base formed of resin, a hard coat layer that includes an antibacterial agent and is formed on one surface side of the base, and an adhesive layer formed on the other surface side of the base. The antibacterial agent is formed by an antibacterial metal such as silver, a silver complex, copper, zinc, or titanium oxide being carried on a carrier such as calcium phosphate, silica gel, glass, or calcium silicate.

As disclosed in Patent Document 2, ceramics formed of composite oxide including rare earth, molybdenum (Mo), etc., are known as a new type of inorganic material that exhibits antibacterial performance and antiviral performance. Examples of such kinds of ceramics include La-Mo-based composite oxide (for example, La₂Mo₂O₉) containing lanthanum (La) as rare earth.

### RELATED ART DOCUMENT

Patent Document 1: Japanese Unexamined Patent Application Publication No. 2017-47659
Patent Document 2: International Publication WO 2020/017493

### Problem to be Solved by the Invention

To date, an adhesive film which utilizes functions (antibacterial performance, antiviral performance, and the like) of rare earth molybdenum-based composite oxide such as La-Mo-based composite oxide, has not been examined in the actual usage situation.

### DISCLOSURE OF THE PRESENT INVENTION

An object of the present invention is to provide an adhesive film which has rare earth molybdenum-based composite oxide exposed, on an opposite side to one surface side on which an adhesive layer is disposed, at the other surface on the opposite side, in order to exhibit functions.

### Means for Solving the Problem

Means for solving the problem are as follows. That is,
<1> An adhesive film including:
   a film layer including rare earth molybdenum-based composite oxide and a base; and
   an adhesive layer disposed on one surface of the film layer, in which
   the rare earth molybdenum-based composite oxide is exposed at a surface on an opposite side to the one surface side.
<2> In the adhesive film according to the-above described <1>, the film layer has a thickness of 10 µm or more and 400 µm or less.
<3> In the adhesive film according to the above-described <1> or <2>, the rare earth molybdenum-based composite oxide includes at least one selected from the group consisting of La-Mo-based composite oxide, La-Mo-W-based composite oxide, and Ce-Mo-based composite oxide.
<4> In the adhesive film according to any one of the above-described <1> to <4>, the base is resin.
<5> In the adhesive film according to any one of the above-described <1> to <4>, the film layer has a thickness of more than 10 µm, and the rare earth molybdenum-based composite oxide is disposed so as to be distant from the surface on the opposite side, merely by 10 µm or less.
<6> In the adhesive film according to any one of the above-described <1> to <4>, the rare earth molybdenum-based composite oxide is dispersed in the base.
<7> In the adhesive film according to any one of the above-described <1> to <6>, an exposed area rate of the rare earth molybdenum-based composite oxide at the surface of the film layer on the opposite side is 4% or more.

### Advantageous Effect of the Invention

The present invention can provide the adhesive film in which the rare earth molybdenum-based composite oxide is exposed at the other surface on the side opposite to the one surface side on which the adhesive layer is disposed, so as to exhibit functions.

### BRIEF DESCRIPTION OF THE DRAWINGS

FIG. 1 is a cross-sectional view schematically showing an adhesive film according to Embodiment 1.
FIG. 2 is a cross-sectional view schematically showing an adhesive film according to Embodiment 2.
FIG. 3 shows (A) an SEM image (magnification: 100 times) of a surface of a film layer of Example 1, and (B) an SEM image (magnification: 500 times) of the surface of the film layer of Example 1.
FIG. 4 shows (A) an SEM image (magnification: 100 times) of a surface of a film layer of Example 2, and (B) an SEM image (magnification: 500 times) of the surface of the film layer of Example 2.
FIG. 5 shows (A) an SEM image (magnification: 100 times) of a surface of a film layer of Example 3, and (B) an SEM image (magnification: 500 times) of the surface of the film layer of Example 3.
FIG. 6 shows (A) an SEM image (magnification: 100 times) of a surface of a film layer of Example 4, and (B) an SEM image (magnification: 500 times) of the surface of the film layer of Example 4.
FIG. 7 shows an X-ray diffraction spectrum derived from La-Mo-based composite oxide which is obtained from the film layer of Example 1.
FIG. 8 shows an X-ray diffraction spectrum derived from La-Mo-based composite oxide which is obtained from the film layer of Example 3.
FIG. 9 shows an X-ray diffraction spectrum derived from a-TiO₂ which is obtained from a film layer of Comparative example 1.

### BEST MODE FOR CARRYING OUT THE INVENTION

### <Embodiment 1>

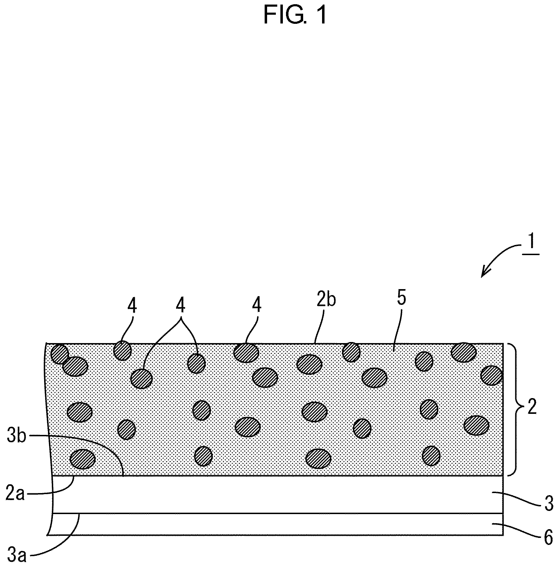

An adhesive film 1 according to Embodiment 1 of the present invention will be described with reference to FIG. 1. FIG. 1 is a cross-sectional view schematically showing the adhesive film 1 according to Embodiment 1. The adhesive film 1 of the present embodiment mainly includes a film layer 2 and an adhesive layer 3, as shown in FIG. 1.

The film layer 2 is a film-like layer that includes a La-Mo-based composite oxide 4 and a base 5. The adhesive layer 3 is disposed on one surface 2a of the film layer 2. A large amount of the powdery (particulate) La-Mo-based composite oxide 4 is exposed at a surface 2b (that is, the other surface 2b, opposite surface 2b) on an opposite side to the one surface 2a side of the film layer 2. In the present embodiment, the powdery La-Mo-based composite oxide 4 is dispersed also inside the film layer 2 (inside the base 5). In the film layer 2, the powdery La-Mo-based composite oxide 4 dispersed in the base 5 is obtained as a result of mixing a predetermined amount of the powdery La-Mo-based composite oxide 4 in a raw material of the base 5 while the film layer 2 is produced, in order to expose the La-Mo-based composite oxide 4 at the surface of the film layer 2 at a predetermined exposed area rate.

The La-Mo-based composite oxide 4 is an example of rare earth molybdenum-based composite oxide. The rare earth molybdenum-based composite oxide is composite oxide that includes a rare earth element and molybdenum (Mo). The rare earth element is not particularly limited as long as the object of the present invention is not impaired, and examples of the rare earth element include lanthanum (La) and cerium (Ce).

Examples of the rare earth molybdenum-based composite oxide include La-Mo-W-based composite oxides and Ce-Mo-based composite oxides in addition to the La-Mo-based composite oxide 4.

The rare earth molybdenum-based composite oxide preferably includes at least one selected from the group consisting of La-Mo-based composite oxide, La-Mo-W-based composite oxide, and Ce-Mo-based composite oxide. One of these composite oxides may be used alone, or two or more of them may be used in combination as long as the object of the present invention is not impaired.

The La-Mo-based composite oxide is composite oxide (lanthanum·molybdenum composite oxide) that includes lanthanum (La) and molybdenum (Mo). As such La-Mo-based composite oxide, La-Mo-based composite oxide that includes La₂Mo₂O₉ as a main phase (main crystal phase) is preferable. The La-Mo-based composite oxide may be formed merely of La₂Mo₂O_{g}, or may include lanthanum·molybdenum composite oxide other than La₂Mo₂O_{g}, as a sub-phase (sub-crystal-phase).

The lanthanum·molybdenum composite oxide other than La₂Mo₂O₉ may include at least one selected from the group consisting of La₂Mo₃O₁₂, La₆Mo₁O₁₂, La₇Mo₇O₃₀, La₂Mo₄O₁₅, La₂MoO₆, La₄MoO₉, and LaMo₂O₅. Among them, at least one selected from the group consisting of La₂Mo₃O₁₂, La₆MoO₁₂, La₇Mo₇O₃₀, and LaMo₂O₅ is particularly preferably included.

The La-Mo-W-based composite oxide is composite oxide (lanthanum·molybdenum·tungsten composite oxide) that includes lanthanum (La), molybdenum (Mo), and tungsten (W). Such La-Mo-W-based composite oxide is not particularly limited as long as the object of the present invention is not impaired, and examples of the La-Mo-W-based composite oxide include La₂MoWO₉, La₂MoₓW₂₋ₓO_{g} (0<x<2), La₂Mo_{1.5}W_{0.5}O₉, and La₂MO_{0.5}W_{1.5}O₉. One of them may be used alone, or two or more of them may be used in combination.

The Ce-Mo-based composite oxide is composite oxide (cerium·molybdenum composite oxide) that includes cerium (Ce) and molybdenum (Mo). Such Ce-Mo-based composite oxide is not particularly limited as long as the object of the present invention is not impaired, and examples of the Ce-Mo-based composite oxide include Ce₂Mo₃O₁₃, Ce(MoO₄)₂, Ce₂MoO₆, Ce₂(MoO₄)₃, Ce₂Mo₄O₁₅, Ce₅(MoO₄)₈, Ce₆(MoO₄)₈(Mo₂O₇), and CeₑMo₁₂O₄₉. One of them may be used alone, or two or more of them may be used in combination.

The rare earth molybdenum-based composite oxide such as La-Mo-based composite oxide can be identified by analyzing an X-ray diffraction spectrum obtained by powder X-ray diffractometry (XRD: X-ray diffraction) (for example, comparison with known X-ray diffraction spectrum data).

The rare earth molybdenum-based composite oxide is used in the form of powder (particles) in the film layer. In the description herein, "powder of rare earth molybdenum-based composite oxide" or "powdery rare earth molybdenum-based composite oxide" may be referred to as "rare earth molybdenum-based composite oxide powder". For example, in the description herein, "powder of La-Mo-based composite oxide" or "powdery La-Mo-based composite oxide" may be referred to as "La-Mo-based composite oxide powder".

The median particle diameter of the rare earth molybdenum-based composite oxide powder is not particularly limited as long as the object of the present invention is not impaired. However, the median particle diameter is, for example, preferably 50 nm or more and 10 µm or less. The median particle diameter of the rare earth molybdenum-based composite oxide powder is obtained as a particle diameter (D50) at the cumulative frequency of 50% as measured by a laser diffraction type particle-size-distribution measuring device.

The rare earth molybdenum-based composite oxide powder is produced, for example, through a preparation step and a first sintering step. A case where the La-Mo-based composite oxide powder is produced will be described as an example.

The preparation step is a step of mixing a lanthanum compound and a molybdenum compound and preparing mixed powder.

The lanthanum compound is a compound that includes lanthanum (La) and is required for producing the La-Mo-based composite oxide, and examples of the lanthanum compound include La(OH)₃, La₂O₃, and La₂(CO₃)₃. For example, at least one selected from the group consisting of La(OH)₃, La₂O₃, and La₂(CO₃)₃ may be used as the lanthanum compound. As the lanthanum compound, La(OH)₃ is preferable.

The molybdenum compound is a compound that includes molybdenum (Mo) and is required for producing the La-Mo-based composite oxide, and examples of the molybdenum compound include MoO₃, MoO₂, MoO, Mo(OH)₃, and Mo(OH)₅. For example, at least one selected from the group consisting of MoO₃, MoO₂, MoO, Mo(OH)₃, and Mo(OH)₅ may be used as the molybdenum compound. As the molybdenum compound, MoO₃ is preferable.

A mixing ratio between the lanthanum compound and the molybdenum compound is not particularly limited as long as the object of the present invention is not impaired, and is preferably adjusted to be, for example, a molar ratio of La:Mo=1:1.

The lanthanum compound and the molybdenum compound are each in the form of powder, and may be mixed with each other in the form of powders, or may be mixed by wet-mixing by adding a solvent such as lower alcohol (ethanol) to the powders. The lanthanum compound and the molybdenum compound may be mixed by, for example, wet-mixing in which alumina balls (alumina pebbles) or the like are used. The mixture (wet mixture) obtained by the wet-mixing may be dried as appropriate by drying in hot water, spray drying, or the like.

Mixed powder of the lanthanum compound and the molybdenum compound is obtained in such a preparation step.

The first sintering step is a step of sintering the mixed powder in order to cause reaction between the lanthanum compound and the molybdenum compound in the mixed powder obtained in the preparation step. In the first sintering step, the mixed powder is sintered, for example, in a temperature condition of 500°C or higher and 700°C or lower for two hours or longer. The first sintering step need not be performed in a specific synthetic air atmosphere, and is performed in a normal atmosphere at atmospheric pressure.

In the first sintering step, the lanthanum compound and the molybdenum compound in the mixed powder react with each other to obtain the La-Mo-based composite oxide including La₂Mo₂O_{g}, etc.

The obtained La-Mo-based composite oxide is processed, as necessary, into a powdery (particulate) form having the median particle diameter in a predetermined range in a pulverizing step.

The pulverizing step is a step of pulverizing the La-Mo-based composite oxide having been subjected to the first sintering, by using a medium-stirring pulverizer such as a bead mill, and thus obtaining powdery La-Mo-based composite oxide (having the median particle diameter in a predetermined range. The conditions such as the pulverizing time are set as appropriate such that the median particle diameter of the La-Mo-based composite oxide is obtained in a predetermined range. Thus, the La-Mo-based composite oxide powder is obtained.

The obtained La-Mo-based composite oxide powder may be granulated as necessary. For example, the La-Mo-based composite oxide powder is subjected to wet mixing and pulverizing by using alumina balls or the like while a solvent such as ethanol is added, and a slurry is thus prepared, and a dried product of the slurry is caused to pass through a sieve having a predetermined mesh opening size, so that the La-Mo-based composite oxide powder that is granulated so as to have a predetermined size, is obtained.

As long as the present invention is not impaired, a product (pulverized product) obtained by sintering the La-Mo-based composite oxide powder and thereafter pulverizing the obtained sintered body may be used as "La-Mo-based composite oxide powder" used for the film layer 2. The sintered body is obtained by, for example, forming the La-Mo-based composite oxide powder which has yet to be sintered, into a predetermined shape, and sintering the obtained formed body in a predetermined temperature condition (for example, 900°C or higher). In the description herein, the sintering step performed for sintering the La-Mo-based composite oxide powder is referred to as "second sintering step". The second sintering step can be performed in an air atmosphere.

The La-Mo-based composite oxide obtained after the second sintering step may be prepared so as to be formed into powdery (particulate) form having the median particle diameter in a predetermined range, as necessary, in a pulverizing step.

In a case where the La-Mo-W-based composite oxide powder is produced, the lanthanum compound, the molybdenum compound, and the tungsten compound are mixed to prepare the mixed powder in the preparation step. Examples of the tungsten compound include WO₃, WO₂, and W₂O₃. The tungsten compound is preferably WO₃. As the molybdenum compound, the same molybdenum compound as used for producing the La-Mo-based composite oxide powder is used.

A mixing ratio among the lanthanum compound, the molybdenum compound, and the tungsten compound is not particularly limited as long as the object of the present invention is not impaired, and may be adjusted to be, for example, a molar ratio of La:Mo:W=2:1.5 to 0.5:0.5 to 1.5.

In a case where Ce-Mo-based composite oxide powder is produced, the cerium compound and the molybdenum compound are mixed to prepare the mixed powder in the preparation step. Examples of the cerium compound include CeO₂, cerium nitrate, cerium chloride, cerium sulfate, cerium hydroxide, cerium carbonate, and cerium acetate. The cerium compound is preferably CeO₂. As the molybdenum compound, the same molybdenum compound as used for producing the La-Mo-based composite oxide powder is used.

A mixing ratio between the cerium compound and the molybdenum compound is not particularly limited as long as the object of the present invention is not impaired, and may be adjusted to be, for example, a molar ratio of Ce:Mo=2:3, a molar ratio of Ce:Mo=1:2, a molar ratio of Ce:Mo=1:1, a molar ratio of Ce:Mo=2:1, a molar ratio of Ce:Mo=3:4, or a molar ratio of Ce:Mo=3:5. The mixing ratio is preferably adjusted to be a molar ratio of Ce:Mo=2:3.

In a case where the La-Mo-W-based composite oxide powder and the Ce-Mo-based composite oxide powder are produced, the steps such as the first sintering step and the pulverizing step are performed as in the production of the La-Mo-based composite oxide powder as described above.

The rare earth molybdenum-based composite oxide such as the La-Mo-based composite oxide exhibits an antibacterial function (antibacterial activity) and an antiviral function (antiviral activity) in both a powdery form before sintering and a powdery form after sintering. A method for evaluating the antiviral performance of the rare earth molybdenum-based composite oxide, and the like will be described below.

The rare earth molybdenum-based composite oxide is antibacterial against Staphylococcus aureus (Gram-positive bacterium), Escherichia coli (Gram-negative bacterium), and the like. The rare earth molybdenum-based composite oxide is assumed to be antibacterial against Klebsiella pneumoniae, methicillin-resistant Staphylococcus aureus, Staphylococcus epidermidis, Pseudomonas aeruginosa, multidrug-resistant Pseudomonas aeruginosa, and the like.

The rare earth molybdenum-based composite oxide is antiviral against bacteriophage Qβ, bacteriophage ϕ6, and the like. Bacteriophage Qβ has no envelope, and is known as substitute virus for norovirus. Bacteriophage ϕ6 has an envelope, and is known as substitute virus for influenza virus. The rare earth molybdenum-based composite oxide is assumed to be antiviral against feline calicivirus (substitute for human norovirus), human influenza virus, classical swine fever virus, bovine viral diarrhea virus, border disease virus, giraffe pestivirus, coronavirus, avian influenza virus, and the like.

The base is a main material of the film layer and holds the rare earth molybdenum-based composite oxide so as to expose the rare earth molybdenum-based composite oxide at the surface of the film layer. In the present embodiment, the rare earth molybdenum-based composite oxide is dispersed in the base during the production, so that a part of the rare earth molybdenum-based composite oxide is exposed at the surface of the film layer (base).

A material to be used for the base is selected as appropriate, taking into consideration that, for example, the material can be processed into a film-like shape, and the rare earth molybdenum-based composite oxide can be dispersed in the material so as to expose a part of the rare earth molybdenum-based composite oxide at the surface. Examples of the material to be used for the base include glass and resin.

The resin to be used for the base is not particularly limited as long as the object of the present invention is not impaired, and examples of the resin include silicone resin, thermosetting elastomer (silicone rubber and the like), thermoplastic elastomer, polyolefin-based resin such as polyethylene (PE), polypropylene (PP), and ethylene-propylene copolymers, acrylic resin, polyester-based resin such as polyethylene terephthalate (PET) and polybutylene terephthalate (PBT), polystyrene-based resin, acrylonitrile·butadiene·styrene (ABS) resin, thermoplastic resin such as modified polyphenylene ether, polyphenylene sulfide, polyamide, polycarbonate, and polyacetal, and thermosetting resin such as phenol resin, epoxy resin, melamine resin, and urea resin. One of these resins may be used alone, or two or more of them may be used in combination.

For example, in a case where the adhesive film is required to be flexible (for example, in a case where the surface shape of an object to which the adhesive film is adhered is curved), the film layer (base) is required to be flexible. Therefore, in such a case, a material of the base is preferably resin because, for example, resin has excellent flexibility in a state of being processed into a film-like shape. In a case where resin is used for the base of the film layer, the film layer is not always required to be flexible.

At the other surface (opposite surface) 2b of the film layer, the rare earth molybdenum-based composite oxide is adjusted so as to be exposed at a predetermined exposed area rate. The exposed area rate of the rare earth molybdenum-based composite oxide is not particularly limited as long as the object of the present invention is not impaired, and is, for example, preferably 4% or more. The upper limit value of the exposed area rate of the rare earth molybdenum-based composite oxide is not particularly limited as long as the object of the present invention is not impaired, and may be, for example, set to be 50% or less, preferably 40% or less, and more preferably 30% or less. A method for calculating the exposed area rate of the rare earth molybdenum-based composite oxide will be described below.

In the present embodiment, a proportion (%) of the rare earth molybdenum-based composite oxide contained in the film layer is adjusted as appropriate such that the exposed area rate of the rare earth molybdenum-based composite oxide is in a predetermined range. For example, in a case where the base is resin (for example, silicone resin), a proportion (%) of the rare earth molybdenum-based composite oxide contained in the film layer may be set to be 20% or more and 70% or less.

The film layer may contain a known additive such as an antiaging agent, a colorant (pigment, dye, and the like), an ultraviolet absorber, an antioxidant, a softener, a crosslinking agent, a curing retarder, a curing accelerator, a surfactant, a filler, a solvent, a catalyst, an adhesive, natural rubber, and synthetic rubber to the extent that the object of the present invention is not impaired.

The thickness of the film layer is not particularly limited as long as the object of the present invention is not impaired, and may be, for example, set to be 10 µm or more and 400 µm or less.

In the present embodiment, the film layer may be produced such that a predetermined amount of the rare earth molybdenum-based composite oxide powder is exposed at least at the surface 2b. A specific example of a method for producing such a film layer will be described below.

The adhesive layer is obtained by forming an adhesive having adhesive strength (pressure-sensitive adhesive strength) into a layer-like shape. A kind of an adhesive used for the adhesive layer is not particularly limited, and examples of the adhesive include known adhesives such as acrylic adhesives, rubber-based adhesives, vinyl alkyl ether-based adhesives, silicone-based adhesives, polyester-based adhesives, polyamide-based adhesives, urethane-based adhesives, fluorine-based adhesives, and epoxy-based adhesives. One of these adhesives may be used alone, or two or more of them may be used in combination.

The adhesive film 1 may include a release liner 6 in order to protect one surface (adhesive surface) 3a of the adhesive layer until used. Such a release liner is not particularly limited, and can be selected as appropriate from among known release liners (for example, release liner formed of a plastic film), and used.

The adhesive layer is stacked on the film layer such that the other surface 3b is adhered to the surface 2a of the film layer 2. The thickness of the adhesive layer is not particularly limited as long as the object of the present invention is not impaired, and may be, for example, set to be 1 µm or more and 30 µm or less.

The adhesive film 1 of the present embodiment can exhibit antibacterial performance and antiviral performance exerted by the rare earth molybdenum-based composite oxide such as the La-Mo-based composite oxide that exists mainly at the surface 2a of the film layer 2 in a state where the adhesive film 1 is adhered to an object by utilizing the adhesive surface 3a of the adhesive layer 3.

### <Embodiment 2>

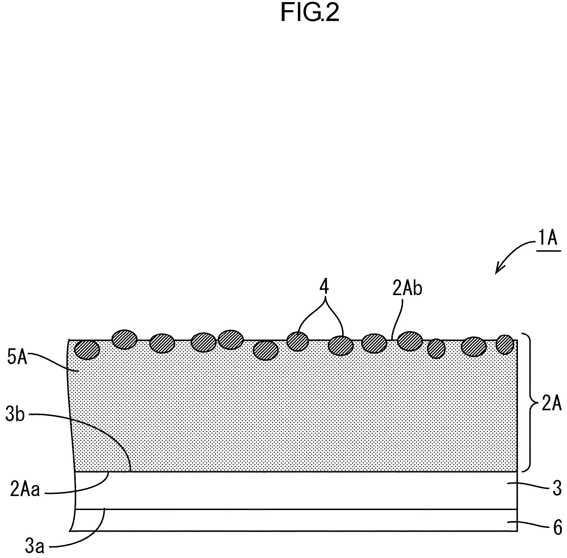

Next, an adhesive film 1A according to Embodiment 2 of the present invention will be described with reference to FIG. 2. FIG. 2 is a cross-sectional view schematically showing the adhesive film 1A according to Embodiment 2. The adhesive film 1A of the present embodiment includes a film layer 2A and the adhesive layer 3, as shown in FIG. 2, similarly to Embodiment 1 described above.

The film layer 2A is a film-like layer that includes the La-Mo-based composite oxide 4 and a base 5A, as in Embodiment 1, and the adhesive layer 3 is disposed on one surface 2Aa of the film layer 2A, as in Embodiment 1. The release liner 6 is adhered to the adhesive layer 3 before the adhesive film 1A is used, as in Embodiment 1.

However, in the film layer 2A of the present embodiment, a large amount of the powdery La-Mo-based composite oxide 4 is fixed to a surface 2Ab of the base 5A formed in a film-like shape. That is, in the film layer 2A, on the surface 2Ab of the base 5A, the powdery La-Mo-based composite oxide 4 is disposed so as to form one layer, or is formed so as to be spread into a layer-like shape as a whole although one layer is not formed.

The La-Mo-based composite oxide 4 is an example of the rare earth molybdenum-based composite oxide as in Embodiment 1, and the same composite oxide as in Embodiment 1 can be used. Basically, the same base as in Embodiment 1 can be used as the base 5A as long as the rare earth molybdenum-based composite oxide such as the powdery La-Mo-based composite oxide 4 can be fixed to the surface 2Ab.

On the other surface 2Ab of the film layer 4A, the rare earth molybdenum-based composite oxide such as the La-Mo-based composite oxide is adjusted so as to be exposed at a predetermined exposed area rate. The exposed area rate of the rare earth molybdenum-based composite oxide is not particularly limited as long as the object of the present invention is not impaired, and is, for example, preferably 4% or more. The upper limit value of the exposed area rate of the rare earth molybdenum-based composite oxide is not particularly limited as long as the object of the present invention is not impaired, and may be, for example, such an exposed area rate as to fully fill the surface 2Ab with the rare earth molybdenum-based composite oxide (that is, the exposed area rate of the rare earth molybdenum-based composite oxide is 100%, or 100% or less). The upper limit value of the exposed area rate of the rare earth molybdenum-based composite oxide may be set to be similar to the value in Embodiment 1 described above.

In the present embodiment, the rare earth molybdenum-based composite oxide such as the powdery La-Mo-based composite oxide 4 is not proactively dispersed in the base 5A.

The film layer 2A may contain various known additives as in Embodiment 1 to the extent that the object of the present invention is not impaired.

The thickness of the film layer 2A is not particularly limited as long as the object of the present invention is not impaired, and may be, for example, set to be 10 µm or more and 400 µm or less.

In the present embodiment, for example, the film layer 2A may have such a structure that the thickness of the film layer 2A is set to be more than 10 µm, and the La-Mo-based composite oxide 4 is disposed so as to be distant from the surface 2Ab of the film layer 2A merely by 10 µm or less in the thickness direction.

The film layer 2A of the present embodiment may be produced so as to fix a predetermined amount of the rare earth molybdenum-based composite oxide powder to the surface of the base 5A, and further expose a predetermined amount of the rare earth molybdenum-based composite oxide powder at least at the surface 2Ab. A specific example of a method for producing the film layer 2A having such a structure will be described below.

The adhesive film 1A of the present embodiment can exhibit antibacterial performance and antiviral performance exerted by the rare earth molybdenum-based composite oxide such as the La-Mo-based composite oxide 4 that exists mainly at the surface 2Aa of the film layer 2A in a state where the adhesive film 1A is adhered to an object by utilizing the adhesive surface 3a of the adhesive layer 3.

As described above, in the adhesive film 1, 1A of Embodiment 1, 2, the rare earth molybdenum-based composite oxide is exposed at the surface 2b, 2Ab at a predetermined rate, and the functions (antibacterial performance, antiviral performance, and the like) of the rare earth molybdenum-based composite oxide can thus be expected. The antibacterial performance and antiviral performance exerted by the rare earth molybdenum-based composite oxide in the adhesive film 1, 1A can be estimated by obtaining an eluted amount of the rare earth molybdenum-based composite oxide as described below.

The adhesive film 1, 1A of Embodiment 1, 2 can be adhered to an object by utilizing the adhesive layer when used.

The present invention will be further described below based on examples. The present invention is by no means limited by these examples.

### [Example 1]

### (Production of La-Mo-based composite oxide)

La(OH)₃ was prepared as the lanthanum compound, and MoO₃ was prepared as the molybdenum compound. Raw material powder of the lanthanum compound and raw material powder of the molybdenum compound were weighed such that a molar ratio therebetween was 1:1 (La:Mo=1:1). After the weighing, the raw material powders were mixed with a predetermined amount of ethanol, and the obtained wet mixture was dried to obtain mixed powder. In the mixed powder, the lanthanum compound in a solid phase and the molybdenum compound in a solid phase were mixed with each other.

Subsequently, the mixed powder was sintered in a temperature condition of 550°C in an air atmosphere for ten hours, to obtain sintered powder formed of a reaction product of the lanthanum compound and the molybdenum compound. The operation described below was performed in order to granulate the obtained sintered powder.

The sintered powder and a predetermined amount of ethanol were put in a resin pot, and the mixture was subjected to wet mixing and pulverizing by using alumina pebbles, to obtain a slurry.

Thereafter, the obtained slurry was dried in a temperature condition of 80°C for about two hours, and the obtained dried product was caused to pass through a sieve having a mesh opening size of 250 µm, to obtain La-Mo-based composite oxide powder as granulated powder.

The granulated La-Mo-based composite oxide powder was powderpress-molded by using a predetermined pressing machine (molding pressure: 98 MPa), and was thereafter subjected to cold isostatic pressing at a pressure of 150 MPa, to obtain a molded body. The molded body was sintered in a temperature condition of 900°C in an air atmosphere for ten hours, to obtain a sintered body. The obtained sintered body was roughly pulverized in a mortar, and was thereafter subjected to wet pulverization by using alumina pebbles, to obtain La-Mo-based composite oxide powder formed of the sintered pulverized product.

The particle diameter of the obtained La-Mo-based composite oxide powder was obtained as a median particle diameter (D50) in terms of volume by laser diffractometry. Specifically, the median particle diameter (D50) of the La-Mo-based composite oxide powder was obtained by using a laser diffraction type particle-size-distribution measuring device (Type "LA-950" manufactured by HORIBA, Ltd.). As a result, the median particle diameter was 0.5 µm.

### (Production of film layer)

A predetermined amount of the La-Mo-based composite oxide powder was mixed with thermosetting silicone resin in an uncured state by using a kneader, to obtain a mixed composition in the form of paste. The mixed composition was applied so as to be thinly spread over a release sheet, and the obtained composition-applied product was thereafter heated under a predetermined temperature condition, and was thus semi-cured. The semi-cured composition-applied product was further heated under a predetermined temperature condition, so that a film layer (proportion of the La-Mo-based composite oxide contained: 66 mass%) in which the thermosetting silicone resin was used as the base, and furthermore, a predetermined amount of the La-Mo-based composite oxide powder was dispersed in the base, was obtained.

### [Example 2]

The film layer was produced in the same manner as in Example 1 except that the proportion of the La-Mo-based composite oxide contained in the film layer was changed to 36 mass%.

### [Example 3]

The La-Mo-based composite oxide powder which was the same as in Example 1, and thermosetting silicone resin in an uncured state were prepared. The thermosetting silicone resin in the uncured state was kneaded by a kneader without putting therein the La-Mo-based composite oxide powder, and was formed into a paste-like form. The obtained uncured thermosetting silicone resin in the form of paste was applied so as to be thinly spread over a release sheet, and the obtained resin-applied product was thereafter heated under a predetermined temperature condition, and thus semi-cured. The La-Mo-based composite oxide powder was placed so as to cover the surface of the semi-cured resin-applied product. The La-Mo-based composite oxide powder in such a state was pressed toward the surface of the semi-cured resin-applied product, by using a predetermined tool, and the La-Mo-based composite oxide powder was thus pressed against and fixed to the surface. Thereafter, the resin-applied product was heated under a predetermined temperature condition, so that a film layer in which the thermosetting silicone resin was used as the base, and furthermore, a predetermined amount of the La-Mo-based composite oxide powder was fixed to the surface of the base, was obtained.

### [Example 4]

The film layer was produced in the same manner as in Example 1 except that a proportion of the La-Mo-based composite oxide contained in the film layer was changed to 23 mass%.

### [Comparative example 1]

The film layer was produced in the same manner as in Example 3 except that powder of anatase-type titanium oxide (a-TiO₂) was used instead of a predetermined amount of the La-Mo-based composite oxide powder.

### [Example 5]

### (Production of La-Mo-W-based composite oxide)

La(OH)₃ was prepared as the lanthanum compound, MoO₃ was prepared as the molybdenum compound, and WO₃ was prepared as the tungsten compound. Raw material powder of the lanthanum compound, raw material powder of the molybdenum compound, and raw material powder of the tungsten compound were weighed such that a molar ratio thereamong was 2:1:1 (La:Mo:W=2:1:1). After the weighing, the raw material powders were mixed with predetermined ethanol, and the obtained wet mixture was dried to obtain mixed powder. In the mixed powder, the lanthanum compound in a solid phase, the molybdenum compound in a solid phase, and the tungsten compound in a solid phase were mixed with each other.

Subsequently, the mixed powder was sintered in a temperature condition of 700°C in an air atmosphere for ten hours, to obtain sintered powder formed of a reaction product of the lanthanum compound, the molybdenum compound, and the tungsten compound. The obtained sintered powder was granulated in the same method as in Example 1.

The median particle diameter (D50) of the obtained La-Mo-W-based composite oxide powder was 0.81 µm.

### (Production of film layer)

The film layer was produced in the same manner as in Example 1 except that the La-Mo-based composite oxide powder was changed to the La-Mo-W-based composite oxide powder. Thus, the film layer (proportion of the La-Mo-W-based composite oxide contained: 66 mass%) in which the thermosetting silicone resin was used as the base, and furthermore, a predetermined amount of the La-Mo-W-based composite oxide powder was dispersed in the base, was obtained.

### [Example 6]

The film layer was produced in the same manner as in Example 5 except that a proportion of the La-Mo-W-based composite oxide contained in the film layer was changed to 23 mass%.

### [Example 7]

The La-Mo-W-based composite oxide powder which was the same as in Example 5, and thermosetting silicone resin in an uncured state were prepared. The thermosetting silicone resin in the uncured state was kneaded by a kneader without putting therein the La-Mo-W-based composite oxide powder, and was formed into a paste-like form. The obtained uncured thermosetting silicone resin in the form of paste was applied so as to be thinly spread over a release sheet, and the obtained resin-applied product was thereafter heated under a predetermined temperature condition, and thus semi-cured. The La-Mo-W-based composite oxide powder was placed so as to cover the surface of the semi-cured resin-applied product. The La-Mo-W-based composite oxide powder in such a state was pressed toward the surface of the semi-cured resin-applied product, by using a predetermined tool, and the La-Mo-W-based composite oxide powder was thus pressed against and fixed to the surface. Thereafter, the resin-applied product was heated under a predetermined temperature condition, so that a film layer in which the thermosetting silicone resin was used as the base, and furthermore, a predetermined amount of the La-Mo-W-based composite oxide powder was fixed to the surface of the base, was obtained.

### [Example 8]

### (Production of Ce-Mo-based composite oxide)

CeO₂ was prepared as the cerium compound, and MnO₃ was prepared as the molybdenum compound. Raw material powder of the cerium compound and raw material powder of the molybdenum compound were weighed such that a molar ratio therebetween was 2:3 (Ce:Mo=2:3). After the weighing, the raw material powders were mixed with predetermined ethanol, and the obtained wet mixture was dried to obtain mixed powder. In the mixed powder, the cerium compound in a solid phase and the molybdenum compound in a solid phase were mixed with each other.

Subsequently, the mixed powder was sintered in a temperature condition of 550°C in an air atmosphere for 12 hours, to obtain sintered powder formed of a reaction product of the cerium compound and the molybdenum compound. The obtained sintered powder was granulated in the same method as in Example 1.

The median particle diameter (D50) of the obtained Ce-Mo-based composite oxide powder was 0.94 µm.

### (Production of film layer)

The film layer was produced in the same manner as in Example 1 except that the La-Mo-based composite oxide powder was changed to the Ce-Mo-based composite oxide powder. Thus, the film layer (proportion of the Ce-Mo-based composite oxide contained: 66 mass%) in which the thermosetting silicone resin was used as the base, and furthermore, a predetermined amount of the Ce-Mo-based composite oxide powder was dispersed in the base, was obtained.

### [Example 9]

The film layer was produced in the same manner as in Example 8 except that a proportion of the Ce-Mo-based composite oxide contained in the film layer was changed to 23 mass%.

### [Measurement·Evaluation]

### (Thickness of film layer)

As the film thickness of the film layer of each of Example 1 and the like, an average value of measurement values obtained by measuring the film thickness at ten points with use of a contact-type film thickness meter (product name "LITEMATIC (registered trademark) VL-50A" manufactured by Mitutoyo Corporation), was used. Table 1 indicates the result.

### (Exposed area rate of rare earth molybdenum-based composite oxide)

The exposed area rate of the rare earth molybdenum-based composite oxide such as the La-Mo-based composite oxide at the surface of the film layer of each of Example 1 and the like was obtained through the following procedure. Firstly, an image of the surface of the film layer was taken by using a scanning electron microscope (SEM) in conditions of the acceleration voltage: 5 kV and the magnification: 100 times, and an SEM image (backscattered electron image) of the surface of the film layer was obtained. The obtained SEM image was binarized while the threshold value of brightness was adjusted so as to allow a particle (powder) and a region between particles to be distinguished from each other, by using predetermined image analysis software (ImageJ, U.S. National Institutes of Health). The threshold value was determined by Yen's method. The obtained binarized image was used to calculate the exposed area rate (%) of the rare earth molybdenum-based composite oxide at the surface of the film layer. Table 1 indicates the result.

### (SEM image)

An image of the surface of the film layer of each of Example 1 and the like was taken by a scanning electron microscope.

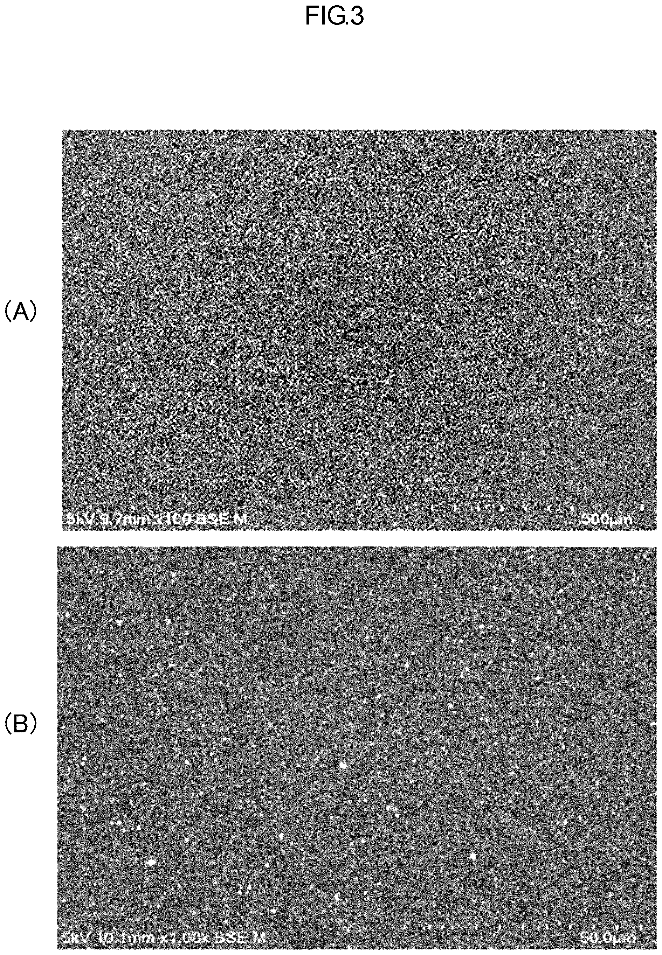

FIG. 3 to FIG. 6 show the obtained SEM images. Each of photographs of (A) shown in FIG. 3 to FIG. 6 represents an SEM image taken at a magnification of 100 times, and each of photographs of (B) represents an SEM image taken at a magnification of 500 times.

### (Identification of rare earth molybdenum-based composite oxide Conditions were as follows)

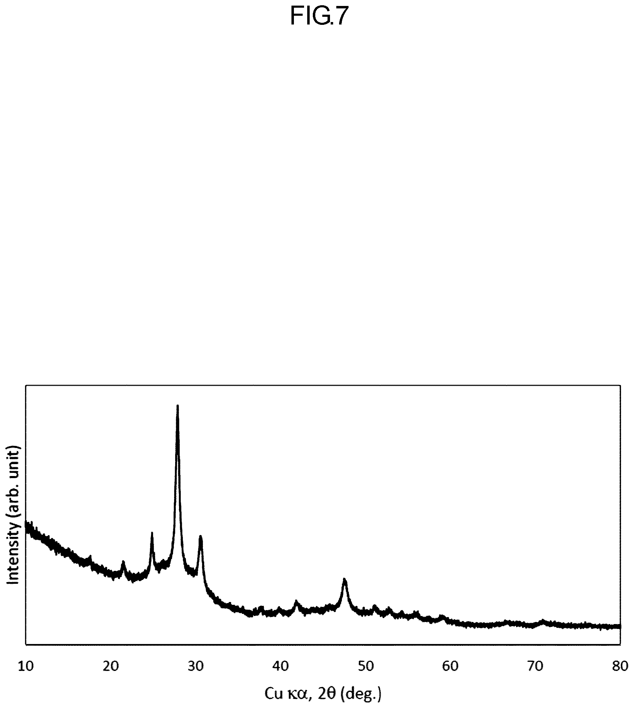

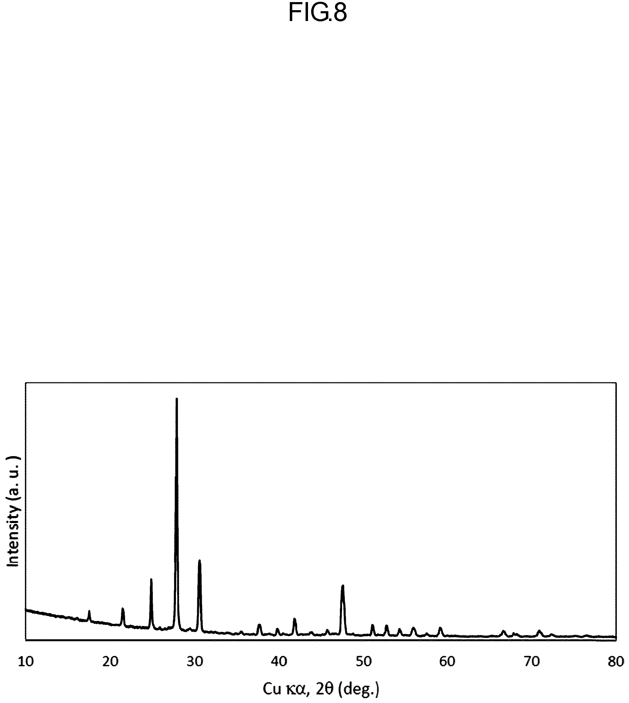

The rare earth molybdenum-based composite oxide such as the La-Mo-based composite oxide was taken from the film layer of each of Example 1 and the like, and a structure of the obtained rare earth molybdenum-based composite oxide was identified according to the X-ray diffraction spectrum. FIG. 7 shows an X-ray diffraction spectrum derived from the La-Mo-based composite oxide which was obtained from the film layer of Example 1. FIG. 8 shows an X-ray diffraction spectrum derived from the La-Mo-based composite oxide which was obtained from the film layer of Example 3. The measurement was performed by powder X-ray diffractometry.

### <Measurement condition>

Measurement device: powder X-ray diffractometer (device name "Smart lab" manufactured by Rigaku Corporation)
Detector: D/teX Ultra 250.
Optical system: Bragg-Brentano type centralized optical system
X-ray output: 40 kV-30 mA
Step width: 0.0200°
Scan axis: 2θ/θ
Scan range: 10.00° to 80.00°
Rotation: present

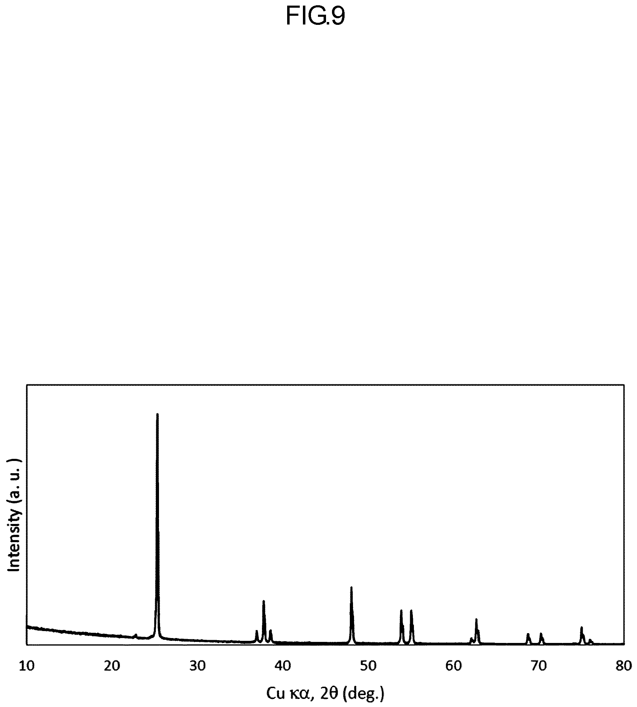

FIG. 9 shows an X-ray diffraction spectrum derived from a-TiO₂ which was obtained from the film layer of Comparative example 1.

### (Eluted amount)

For simple substitute tests for antibacterial performance and antiviral performance in the film layer of each of Example 1 and the like, an eluted amount of metal ions was measured as follows. A square cut piece having one side of 50 mm was cut out from the obtained film layer, and the cut piece was immersed in 100 ml of ultrapure water in a predetermined container. Subsequently, in a state where the cut piece was immersed in the ultrapure water, the ultrapure water in the container was stirred by a glass rod for one minute, and the container in this state was thereafter left as it was for 24 hours. A supernatant liquid was collected from the container having been left as it was for 24 hours, and used as a measurement sample. An eluted amount of each of lanthanum (La), cerium (Ce), Mo (molybdenum), and the like included in the measurement sample thus obtained was measured by ICP emission spectrometry (inductively coupled plasma optical emission spectrometry). Table 1 indicates the result. In Examples 5 to 7, the total value (total eluted amount) of the eluted amount of the molybdenum (Mo) and the eluted amount of the tungsten (W) is indicated.

### (Antiviral performance evaluation)

In compliance with JIS R 1756:2013 "Fine ceramics (advanced ceramics, advanced technical ceramics)-Determination of antiviral activity of photocatalytic materials under indoor lighting environment-Test method using bacteriophage Q-beta", an antiviral performance evaluation test was performed for the film layer of Example 3 typifying each example. Specifically, bacteriophage Qβ was used as test virus, and an antiviral activity value (dark place) VD was obtained after elapse of six hours. The antiviral activity value (dark place) VD was obtained as VD=Log(UD)-Log(TD) for the time of action (six hours). Log(UD) represents a logarithmic value (average value) of the number of phages for the time of action (six hours) in an unprocessed test product. Log(TD) represents a logarithmic value (average value) of the number of phages for the time of action (six hours) in a processed test product. The number of samples for each test product was three.

In a case where the concentration of the inoculated phage liquid was 2.6×10⁷ cfu/ml and an inoculated amount of the inoculated phage liquid was 0.1 ml per one sample, the infectivity titer (pfu/sample) was counted.

The lower limit of detection (definition) in the antiviral performance evaluation was as follows. When N₀ represents an infectivity titer obtained when zero hours elapsed, and N represents an infectivity titer obtained when t hours elapsed, the common logarithm of N/N₀ is represented by log(N/N₀). Time t represents a time of action. A smaller value out of Log (Nₜ/N₀) and Log (Nₜ₊₁/N₀) was set as the lower limit of detection when Log (Nₜ/N₀) -Log (Nₜ₊₁/N₀) ≤0.5 was satisfied although the antiviral activity value VD was 3.0 or more (that is, VD≥3.0).

Table 1 indicates the result (antiviral activity value VD) of the antiviral performance evaluation in Example 3. Also for the film layer of Comparative example 1, the same antiviral performance evaluation was performed.

**[Table 1]**

| | Production method | Film layer | | | Proportion of rare earth Mo-based composite oxide contained (mass%) | Exposed area rate of rare earth Mo-based composite oxide (%) | Eluted amount (ppm) | | | Antiviral activity value (after elapse of six hours) |
|---|---|---|---|---|---|---|---|---|---|---|
| | | Oxide | Base | Thickness (µm) | | | La | Ce | Mo (+W) | |
| Ex. 1 | kneaded | La₂Mo₂O₉ | silicone | 350 | 66 | 20 | 0.89 | | 1.1 | |
| Ex. 2 | kneaded | La₂Mo₂O₉ | silicone | 350 | 36 | 10 | 0.29 | | 0.59 | |
| Ex. 3 | fixed to surface | La₂Mo₂O₉ | silicone | 350 | - | 100 | 5.80 | | 4.3 | 5.5 |
| Ex. 4 | kneaded | La₂Mo₂O₉ | silicone | 350 | 23 | 4.1 | 0.03 | | 0.26 | |
| Ex. 5 | kneaded | La₂MoWO₉ | silicone | 350 | 66 | 24 | 0.44 | | 0.56 | |
| Ex. 6 | kneaded | La₂MoWO₉ | silicone | 350 | 23 | 7.3 | 0.04 | | 0.15 | |
| Ex. 7 | fixed to surface | La₂MoWO₉ | silicone | 350 | - | 100 | 2.5 | | 4.1 | |
| Ex. 8 | kneaded | Ce₂Mo₃O₁₃ | silicone | 350 | 66 | 14 | | 0.09 | 1.0 | |
| Ex. 9 | kneaded | Ce₂Mo₃O₁₃ | silicone | 350 | 23 | 9.0 | | 0.04 | 0.57 | |
| Comp. Ex. 1 | fixed to surface | a-TiO₂ | silicone | 350 | | | | | | 0.6 |

Among Examples 1 to 9, Examples 1, 2, 4 to 6, 8, and 9 correspond to Embodiment 1 described above, and Examples 3 and 7 corresponded to Embodiment 2. In Table 1, the film layer production method corresponding to Embodiment 1 is indicated as "kneaded", and the film layer production method corresponding to Embodiment 2 is indicated as "fixed to surface".

In the film layer of Example 1, the La-Mo-based composite oxide powder was dispersed at the proportion of 66 mass% in the thermosetting silicone resin serving as the base. The thickness of the film layer was 350 µm, and the exposed area rate of the La-Mo-based composite oxide at the surface of the film layer was 20%. As indicated in the SEM image in FIG. 3, it was confirmed that a large amount of the La-Mo-based composite oxide powder was dotted at the surface of the film layer of Example 1. When the La-Mo-based composite oxide powder existing at the surface of the film layer was analyzed by XRD, the X-ray diffraction spectrum shown in FIG. 7 indicated that the La-Mo-based composite oxide included La₂MoO₆. For the film layer of Example 1, the eluted amount of lanthanum was 0.89 ppm and the eluted amount of molybdenum was 1.1 ppm. Therefore, the film layer of Example 1 was sufficiently expected to exhibit the antibacterial performance and antiviral performance exerted by the La-Mo-based composite oxide existing at the surface and the like.

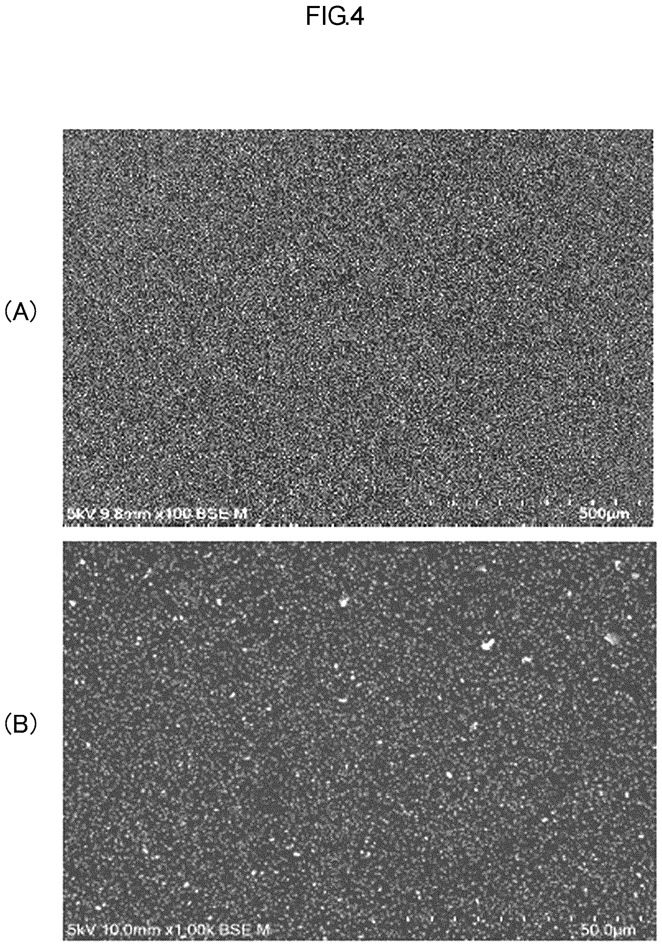

In the film layer of Example 2, the La-Mo-based composite oxide powder was dispersed at the proportion of 36 mass% in the thermosetting silicone resin serving as the base. The thickness of the film layer was 350 µm, and the exposed area rate of the La-Mo-based composite oxide at the surface of the film layer was 10%. As indicated in the SEM image in FIG. 4, it was confirmed that a large amount of the La-Mo-based composite oxide powder was dotted at the surface of the film layer of Example 2 although the amount was slightly less than that of Example 1. The X-ray diffraction spectrum obtained from the La-Mo-based composite oxide existing at the surface of the film layer of Example 2 was substantially similar to that of Example 1, and the detailed description thereof is omitted. For the film layer of Example 2, the eluted amount of lanthanum was 0.29 ppm and the eluted amount of molybdenum was 0.59 ppm. Therefore, the film layer of Example 2 was sufficiently expected to exhibit the antibacterial performance and the antiviral performance exerted by the La-Mo-based composite oxide existing at the surface and the like.

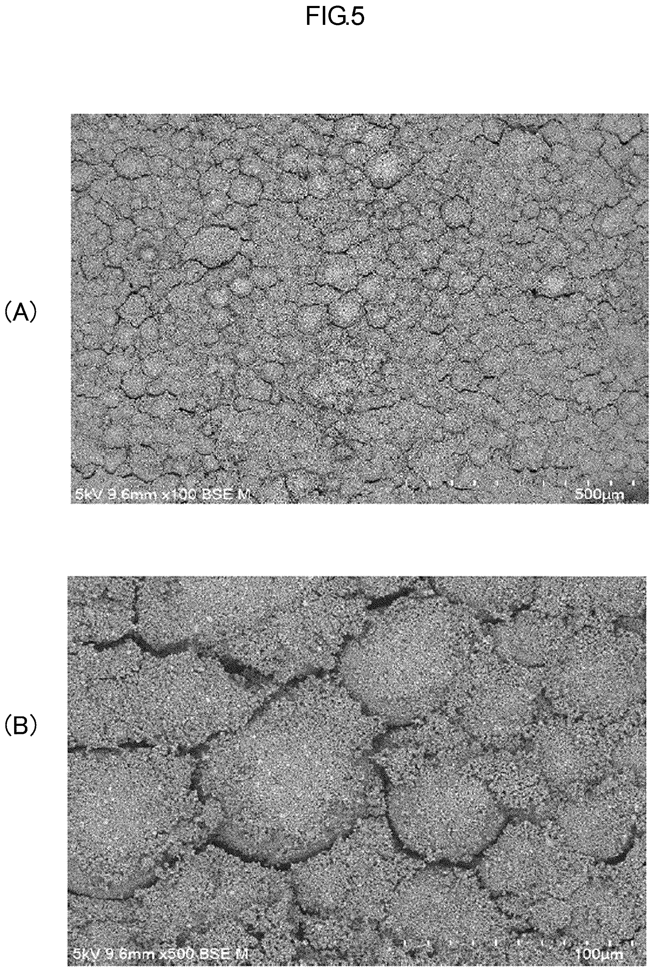

In the film layer of Example 3, the La-Mo-based composite oxide powder was fixed to the surface of the film-shaped thermosetting silicone resin serving as the base. The thickness of the film layer was 350 µm, and the exposed area rate of the La-Mo-based composite oxide at the surface of the film layer was 100%. That is, in Example 3, the La-Mo-based composite oxide powder was formed into a thin-layer-like form on one surface of the film-shaped base so as to cover the surface (see the SEM image in FIG. 5). The film layer of Example 3 had the thickness of 350 µm (that is, larger than 10 µm), and the La-Mo-based composite oxide powder was disposed so as to be distant, merely by 10 µm or less, from the surface on the side on which the La-Mo-based composite oxide powder was disposed. When the La-Mo-based composite oxide powder existing at the surface of the film layer was analyzed by XRD, it was confirmed from the X-ray diffraction spectrum shown in FIG. 8 that the La-Mo-based composite oxide included La₂MoO₆. For the film layer of Example 3, the eluted amount of lanthanum was 5.8 ppm and the eluted amount of molybdenum was 4.3 ppm. Therefore, the film layer of Example 3 was sufficiently expected to exhibit the antibacterial performance and the antiviral performance exerted by the La-Mo-based composite oxide existing at the surface and the like. As indicated in Table 1, the antiviral activity value of the film layer of Example 3 was 5.5, and it was confirmed that the antiviral activity value of Example 3 was more excellent than that of Comparative example 1.

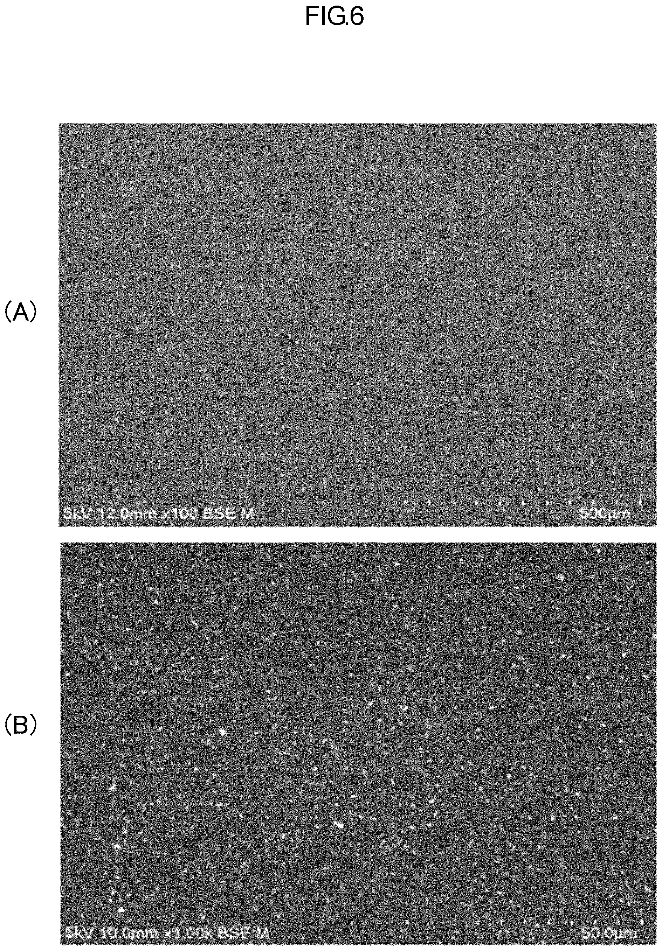

In the film layer of Example 4, the La-Mo-based composite oxide powder was dispersed at the proportion of 23 mass% in the thermosetting silicone resin serving as the base. The thickness of the film layer was 350 µm, and the exposed area rate of the La-Mo-based composite oxide at the surface of the film layer was 4.1%. As indicated in the SEM image in FIG. 6, it was confirmed that a large amount of the La-Mo-based composite oxide powder was dotted at the surface of the film layer of Example 4 although the amount was less than those of Examples 1 and 2. The X-ray diffraction spectrum obtained from the La-Mo-based composite oxide existing at the surface of the film layer of Example 4 was substantially similar to that of Example 1, and the detailed description thereof is omitted. For the film layer of Example 4, the eluted amount of lanthanum was 0.03 ppm and the eluted amount of molybdenum was 0.26 ppm. Therefore, the film layer of Example 4 was sufficiently expected to exhibit the antibacterial performance and the antiviral performance exerted by the La-Mo-based composite oxide existing at the surface and the like.

In the film layer of Comparative example 1, powder of anatase-type titanium oxide (a-TiO₂) as a photocatalyst was fixed to the surface of film-shaped thermosetting silicone resin serving as the base. The thickness of the film layer was 350 µm, and the exposed area rate of the anatase-type titanium oxide at the surface of the film layer was 100%. That is, in Comparative example 1, powder of the anatase-type titanium oxide was formed into a thin-layer-like form on one surface of the film-shaped base so as to cover the surface. When the oxide powder existing at the surface of the film layer was analyzed by XRD, it was confirmed from the X-ray diffraction spectrum shown in FIG. 9 that the oxide included a-TiO₂. Therefore, the film layer of Comparative example 1 was sufficiently expected to exhibit the antibacterial performance and the antiviral performance exerted by the La-Mo-based composite oxide existing at the surface and the like. However, as indicated in Table 1, the antiviral activity value was 0.6. This was because, since the antiviral performance was evaluated in a dark place, a-TiO₂ as the photocatalyst was not able to function.

In the film layer of Example 5, the La-Mo-W-based composite oxide powder was dispersed at the proportion of 66 mass% in the thermosetting silicone resin serving as the base. The thickness of the film layer was 350 µm, and the exposed area rate of the La-Mo-W-based composite oxide at the surface of the film layer was 24%. When the La-Mo-W-based composite oxide powder existing at the surface of the film layer was analyzed by XRD, it was found from the X-ray diffraction spectrum that the La-Mo-W-based composite oxide included La₂MoWO₉. For the film layer of Example 5, the eluted amount of lanthanum was 0.44 ppm and the total of eluted amounts of molybdenum and tungsten was 0.56 ppm. The film layer of Example 5 having such a configuration was sufficiently expected to exhibit the antibacterial performance and the antiviral performance exerted by the La-Mo-W-based composite oxide powder existing at the surface and the like.

In the film layer of Example 6, the La-Mo-W-based composite oxide powder was dispersed at the proportion of 23 mass% in the thermosetting silicone resin serving as the base. The thickness of the film layer was 350 µm, and the exposed area rate of the La-Mo-W-based composite oxide at the surface of the film layer was 7.3%. It was confirmed that a large amount of the La-Mo-W-based composite oxide powder was dotted at the surface of the film layer of Example 6 although the amount was slightly less than that of Example 5. The X-ray diffraction spectrum obtained from the La-Mo-W-based composite oxide existing at the surface of the film layer of Example 6 was substantially similar to that of Example 5, and the detailed description thereof is omitted. For the film layer of Example 6, the eluted amount of lanthanum was 0.04 ppm and the eluted amount of molybdenum was 0.15 ppm. Therefore, the film layer of Example 6 was sufficiently expected to exhibit the antibacterial performance and the antiviral performance exerted by the La-Mo-W-based composite oxide existing at the surface and the like.

In the film layer of Example 7, the La-Mo-W-based composite oxide powder was fixed to the surface of the film-shaped thermosetting silicone resin serving as the base. The thickness of the film layer was 350 µm, and the exposed area rate of the La-Mo-W-based composite oxide at the surface of the film layer was 100%. That is, in Example 7, the La-Mo-W-based composite oxide powder was formed into a thin-layer-like form on one surface of the film-shaped base so as to cover the surface. The film layer of Example 7 had the thickness of 350 µm (that is, larger than 10 µm), and the La-Mo-W-based composite oxide powder was disposed so as to be distant, merely by 10 µm or less, from the surface on the side on which the La-Mo-W-based composite oxide powder was disposed. When the La-Mo-W-based composite oxide powder existing at the surface of the film layer was analyzed by XRD, it was confirmed from the X-ray diffraction spectrum that the La-Mo-W-based composite oxide included La₂MoWO₉. For the film layer of Example 7, the eluted amount of lanthanum was 2.5 ppm and the total of eluted amounts of molybdenum and tungsten was 4.1 ppm. Therefore, the film layer of Example 7 was sufficiently expected to exhibit the antibacterial performance and the antiviral performance exerted by the La-Mo-W-based composite oxide existing at the surface and the like.

In the film layer of Example 8, the Ce-Mo-based composite oxide powder was dispersed at the proportion of 66 mass% in the thermosetting silicone resin serving as the base. The thickness of the film layer was 350 µm, and the exposed area rate of the Ce-Mo-based composite oxide at the surface of the film layer was 14%. When the Ce-Mo-based composite oxide powder existing at the surface of the film layer was analyzed by XRD, it was found from the X-ray diffraction spectrum that the Ce-Mo-based composite oxide included Ce₂Mo₃O₁₃. For the film layer of Example 8, the eluted amount of cerium was 0.09 ppm and the eluted amount of molybdenum was 1 ppm. The film layer of Example 8 having such a configuration was sufficiently expected to exhibit the antibacterial performance and the antiviral performance exerted by the Ce-Mo-based composite oxide powder existing at the surface and the like.

In the film layer of Example 9, the Ce-Mo-based composite oxide powder was dispersed at the proportion of 23 mass% in the thermosetting silicone resin serving as the base. The thickness of the film layer was 350 µm, and the exposed area rate of the Ce-Mo-based composite oxide at the surface of the film layer was 9%. It was confirmed that a large amount of the Ce-Mo-based composite oxide powder was dotted at the surface of the film layer of Example 9 although the amount was slightly less than that of Example 8. The X-ray diffraction spectrum obtained from the Ce-Mo-based composite oxide existing at the surface of the film layer of Example 9 was substantially similar to that of Example 8, and the detailed description thereof is omitted. For the film layer of Example 9, the eluted amount of cerium was 0.04 ppm and the eluted amount of molybdenum was 0.57 ppm. The film layer of Example 9 having such a configuration was sufficiently expected to exhibit the antibacterial performance and the antiviral performance exerted by the Ce-Mo-based composite oxide powder existing at the surface and the like.

### (Production of adhesive film)

The adhesive film was obtained by stacking an adhesive layer (silicone resin or acrylic resin, thickness: 10 µm) formed on a release liner, on the film layer of each of Examples 1 to 9.

### EXPLANATION OF SYMBOLS

- 1, 1A:: adhesive film
- 2, 2A:: film layer
- 2a, 2Aa:: one surface
- 2b, 2Ab:: the other surface (opposite surface)
- 3:: adhesive layer
- 4:: La-Mo-based composite oxide (rare earth molybdenum-based composite oxide)
- 5:: base
- 6:: release liner

## Claims

1. An adhesive film comprising:
a film layer including rare earth molybdenum-based composite oxide and a base; and
an adhesive layer disposed on one surface of the film layer, wherein
the rare earth molybdenum-based composite oxide is exposed at a surface on an opposite side to the one surface side.

2. The adhesive film according to claim 1, wherein the film layer has a thickness of 10 µm or more and 400 µm or less.

3. The adhesive film according to claim 1 or claim 2, wherein the rare earth molybdenum-based composite oxide includes at least one selected from the group consisting of La-Mo-based composite oxide, La-Mo-W-based composite oxide, and Ce-Mo-based composite oxide.

4. The adhesive film according to any one of claim 1 to claim 3, wherein the base is resin.

5. The adhesive film according to any one of claim 1 to claim 4, wherein
the film layer has a thickness of more than 10 µm, and
the rare earth molybdenum-based composite oxide is disposed so as to be distant from the surface on the opposite side, merely by 10 µm or less.

6. The adhesive film according to any one of claim 1 to claim 4, wherein the rare earth molybdenum-based composite oxide is dispersed in the base.

7. The adhesive film according to any one of claim 1 to claim 6, wherein an exposed area rate of the rare earth molybdenum-based composite oxide at the surface of the film layer on the opposite side is 4% or more.
